# EUROPEAN PATENT SPECIFICATION

(11) **EP 3 828 870 B1**
(45) Date of publication and mention of the grant of the patent: **24.05.2023**
(21) Application number: 19212561.5
(22) Date of filing: 29.11.2019
(51) Int. Cl.: G09B 23/28

(54) **JAW MODEL, TOOTH MODEL AND SYSTEM FOR PRACTICING TECHNIQUES OF OPERATIVE DENTISTRY**
KIEFERMODELL, ZAHNMODELL UND SYSTEM ZUM ÜBEN VON TECHNIKEN DER ZAHNCHIRURGIE
MODÈLE DE MÂCHOIRE, MODÈLE DE DENT ET SYSTÈME POUR PRATIQUER DES TECHNIQUES DE DENTISTERIE OPÉRATOIRE

(43) Date of publication of application: 02.06.2021
(73) Proprietor: 3D medical print KG, 4860 Lenzing (AT)
(72) Inventor: Remplbauer, Stefan, 4861 Schörfling am Attersee (AT); Valean, Adrian, 4861 Schörfling am Attersee (AT)
(74) Representative: Grünecker Patent- und Rechtsanwälte PartG mbB

(56) References cited:
- WO-A1-2017/096404
- WO-A1-2018/227094
- CN-U- 208 271 446
- US-A- 3 458 936
- US-A1- 2011 045 431
- US-B1- 10 096 267

## Description

### BACKGROUND OF THE INVENTION

### 1. TECHNICAL FIELD

The present invention relates to a jaw model and a tooth model which are used for dental training purposes by dental students in order to experience dental practices and oral surgery techniques, e.g. in endodontics and/or orthodontics, further referred to as operative dentistry. Moreover, the present invention relates to a system combined of a 3D-printed multilayered jaw model and a plurality of 3D-printed multilayered tooth models that is used to imitate realistic human teeth in a lifelike manner including the bone structure and the gingiva of a human jaw and the variety of different layers and shapes of a human tooth. The present invention is used as a substitute for a naturally grown human jaw/tooth, for example, for teaching and training of novice dental students on therapeutic practices and treatment of infection diseases associated with a natural jaw/tooth. Thereby, the dental student is given the training possibility to experience the particulars in tissue/tooth morphology and hardness before practicing on natural teeth and jaws of a human patient.

### 2. DESCRIPTION OF THE RELATED ART

Prior art document US 5,120,229 A discloses a jaw model for teeth to be mounted therein, comprising an artificial jaw member defining tooth-receiving sockets. Each single-layer tooth has a root removably seated in one of the sockets and bonded thereto by elastomeric adhesive. The tooth exhibits a resiliently seated characteristic similar to that of the natural tooth in a human jaw. Also, a preformed, artificial gingiva may be applied which exhibits improved, lifelike characteristics for a practice experience that is closer to clinical reality.

Prior art document US 8,425,233 B2 discloses a tooth to be used in a standard jaw tooth model, which allows students under dental training to experience dental practices. More particularly, the present invention relates to a tooth to be used for experiencing morphological studies in the formation of an anchor tooth, the formation of a cavity, etc., particularly a tooth to be used in a jaw tooth model provided with standards for evaluating tooth formation.

Prior art document WO2018227094 discloses a tooth holding sleeve having a tooth holding socket, a conductive gel cavity located below the tooth holding socket, and a passageway extending from an outer wall of the tooth holding sleeve to the conductive gel cavity. The tooth replica may be 3D printed replica.
Patent literature 1: US 5,120,229 A
Patent literature 2: US 8,425,233 B2
Patent literature 3: WO 2018227094.

### SUMMARY OF THE INVENTION

### 1. PROBLEM TO BE SOLVED BY THE INVENTION

Patent literature 1 and patent literature 2 disclose separate models for a jaw and a tooth for dental training to experience dental practices and oral surgery techniques. However, both documents disclose simplified models of a jaw or a tooth which are less detailed as compared to a natural jaw or tooth. Therefore a dental student would not have the possibility to be trained with a training model, which realistically replicates human teeth with their surroundings.

The problem to be solved by the invention is defined as providing a jaw model and/or a tooth model which allows a more lifelike practicing techniques of operative dentistry.

### 2. MEANS TO SOLVE THE PROBLEM

To solve the above-identified problem, the present invention provides a system for practicing techniques of operative dentistry according to the sole independent claim 1.

It may prove advantageous if the jaw model is modeled based on a 3D-scan of a human mandible or maxilla. This allows an even more lifelike practicing of respective techniques of operative dentistry.

It may turn out beneficial if the jaw model comprises at least one of the following features:
The jaw model comprises a core and a mask, the core replicating a bone structure of the naturally grown jaw and the mask replicating a tissue structure surrounding the bone structure of the naturally grown human jaw, wherein the core is preferably embedded in the mask in a form-fit manner, wherein more preferably the mask has a lower hardness than the core.

Each section of the jaw model replicates one of the following sections of a natural human jaw:
Schneider membrane, preferably located next to the antrum section, wherein the Schneider membrane more preferably builds the membranous lining of the maxillary sinus, wherein the Schneider membrane even more preferably is printed in soft material with a hardness of a Shore Scale A in an range from 18 to 30 and/or a thickness in the range from 0.2 to 0.5 mm, wherein the Schneider membrane even more preferably can be lifted off the printed bone (with suitable instruments).

A Gap between cortical bone and membrane, wherein said Gap is preferably a 3D-printed layer of support material, more preferably with a thickness in the range from 0.02 the 0.09 mm, wherein the Gap is even more preferably located between the Schneider membrane section and the cortical bone section.

Trabeculae, preferably as a spongy system of fine trabeculae, more preferably 3D-printed with a hardness of Shore Scale D in a range from 70 to 90, wherein the Trabeculae section more preferably surrounds cavities wherein the bone marrow sections is located.

Bone marrow, preferably 3D-printed with a hardness of a Shore Scale A in an area between 15 and 35, wherein the bone marrow section is even more preferably inhomogeneously mixed with the trabeculae section in order to imitate different bone classes.

Cortical bone, which preferably surrounds the cancellous area constituted of the bone marrow section and the Trabeculae section, wherein the cortical bone section is more preferably 3D-printed with a hardness of Shore Scale D in a range from 70 to 90 and/or a thickness in the range from 1 to 2 mm.

Tissue-like fiber, preferably printed with a thickness in the range from 0.02 to 0.09 mm, more preferably with a hardness of Shore Scale A in the range from 8 to 12, in particular 10, wherein the tissue-like fiber section more preferably simulates connective tissue fibers and/or attaches the gingiva section to the cortical bone section, preferably such that the tissue-like fiber section can be scraped off the cortical bone section (with special instruments).

Gingiva, preferably with a Tensile Tear Resistance in the range from 4 to 7 kg/cm, so that it can be used for practicing different cutting and stitching techniques.

Antrum.
a core and a mask, the core replicating a bone structure of the naturally grown jaw, and the mask replicating a tissue structure of the naturally grown human jaw surrounding the bone structure, wherein the core is preferably embedded in the mask in a form-fit manner, wherein more preferably the mask has a lower hardness than the core. This embodiment may help future dentists to experience and study the natural behavior of natural tissue and bone during practicing. The core may have a porous structure and/or surface with a plurality of pores which are partially or fully filled with by the mask.

In this context, it may also prove advantageous if the core has a degree of hardness Shore Scale D in the range of 70 to 90 and/or the mask has a degree of hardness Shore Scale A in the range of 15 to 35.

It may turn out helpful if the core and/or the mask at least partially forms the at least one receptacle, preferably so as to removably receive and fix the at least one tooth model by force-fit and/or form-fit, wherein the receptacle more preferably has the negative shape of a tooth stump or a tooth root. With such configuration, the tooth model may be easily fitted into and released from the receptacle.

It may turn out beneficial if the jaw model comprises a magnet and an intermediate plate which is magnetically coupleable with the magnet, wherein the intermediate plate is preferably mechanically coupleable with a holding device, more preferably a phantom head, even more preferably by means of at least one screw. With such configuration, the customized personal jaw model of a student of dentistry can be easily attached to and detached from e.g. a university's phantom head.

The above-identified problem is also partially solved by a tooth model for practicing techniques of operative dentistry, the tooth model being manufactured by means of 3D-printing and modeled after a naturally grown human tooth, wherein the tooth model has at least two sections of different hardness and is configured to be removably inserted into a receptacle of a jaw model, preferably the jaw model according to one of the preceding claims.

It may turn out beneficial if the tooth model is modeled after a human tooth based on a 3D-scan of one of the human teeth 17-27 or 37-47.

It may turn out helpful if each of the sections replicates one of the tooth layers of the human tooth, preferably pulp, dentin with canaliculi, dentin, transpa, enamel/incisal, cement, wherein more preferably the sections have different colors, even more preferably each section has a natural color and hardness of the corresponding tooth layer of the human tooth. Preferably, from inside to outside, the layers/sections are arranged in the order: pulp, dentin with canaliculi, dentin, transpa, enamel/incisal, cement. Preferably, at least one of said sections partially or fully covers another of said sections.

It may prove pertinent if the tooth model comprises a tooth stump or one or two tooth roots. With such configuration, the tooth model has a naturalistic appearance and can be easily fitted into and released from the receptacle.

It may turn out useful if at least one of said sections, preferably the outermost section, has different colors and/or different hardness, preferably on the surface thereof, to replicate tooth aging.

It may prove useful if the color and/or hardness of said at least one section gradually changes towards the surface thereof. Preferably, the color gets darker and/or the hardness gets lower towards the surface of said at least one section.

It may turn out pertinent if the tooth model comprises a caries structure replicating caries of a naturally grown human tooth, wherein preferably the caries structure is provided in at least one of said sections and differs in material properties from the surrounding material forming said section, particularly by darker color and/or lower hardness, wherein more preferably the caries structure continuously extends across the at least one section and/or extends across a boundary between adjacent two sections. This embodiment may help future dentists to identify caries structures of a naturally grown human tooth and to practice suitable treatment technologies. Preferably, the caries structure diverges towards the inside of the tooth model and converges towards the outside of the tooth model. In other words, the cross-sectional area and/or volume occupied by the caries structure decreases towards the surface of the tooth model, i.e. the cross-sectional area and/or volume occupied by the caries structure is gradually reduced from an inner layer/section to an outer layer/section. More preferably, the cross-sectional area and/or volume occupied by the caries structure is greater in any of the inner layers/sections than in any of the outer layers/sections. Preferably, the caries structure is also exposed on the surface of the tooth model, i.e. on the outer surface of the outermost layer/section of the tooth model.

It may be of advantage if the tooth model comprises a fracture structure replicating fracture of a naturally grown human tooth, wherein preferably the fracture structure is provided in at least one of said sections and differs from the surrounding material forming said section by forming at least one breaking edge on the surface of the tooth, wherein more preferably the fracture structure cuts through at least two of said sections, so that the at least two sections are exposed on the surface of the tooth. Preferably, one of the fractured sections is located at a center of the exposed surface and at least another one of the fractured sections partially or fully encircles the fractured section located at the center of the exposed surface. Preferably, two or more fractured sections are concentrically arranged on the exposed surface. This embodiment may help future dentists to identify fracture structures of a naturally grown human tooth and to practice suitable treatment technologies.

Another preferred aspect of the invention relates to a system for practicing techniques of operative dentistry, said system comprising at least one jaw model according to one of claims 1 to 6 and at least one tooth model according to one of claims 7 to 14.

The complete system imitates a natural human jaw, while the interchangeability of the tooth models in the jaw model provide a high versatility and practical use. The system may be arbitrarily composed of a jaw model and at least one of a plurality of differently shaped tooth models.

The above and other objects, features, advantages and technical and application significance of this invention will be better understood by reading the following detailed description of the invention, in consideration with the accompanying drawings.

### BRIEF DESCRIPTION OF THE DRAWINGS

FIG. 1 shows a perspective view of a system of a first embodiment of a 3D-printed jaw model and a plurality of 3D-printed tooth models.
FIG. 2 shows a perspective view of a system of second embodiment of a 3D-printed jaw model and a plurality of 3D-printed tooth models.
FIG. 3 shows a perspective views of six separated layers/sections of a 3D-printed tooth model with a stump (FIG.3A) and a cross-sectional view of the six separated layers/sections of the 3D-printed tooth model with a stump (FIG.3B).
FIG. 4 shows a perspective view of a 3D-printed tooth model with a stump end (FIG.4A) and a cross-sectional view of the 3D-printed tooth model with a stump (FIG.4B).
FIG. 5 shows a perspective view of six separated layers/sections of a 3D-printed tooth model with a root (FIG.5A) and a cross-sectional view of the six separated layers/sections of the 3D-printed tooth model with a root (FIG.5B).
FIG. 6 shows a perspective view of a 3D-printed tooth model with a root (FIG.6A), a cross-sectional view of the 3D-printed tooth model with a root (FIG.6B), and a perspective view of a system of a third embodiment of a 3D-printed jaw model and a plurality of 3D-printed tooth models with a root (Fig.6C).
FIG. 7 shows a perspective sectional view of a 3D-molar tooth model with a caries structure (FIG. 7A) and a cross-sectional view of the 3D-molar tooth model with the caries structure (FIG. 7B).
FIG. 8 shows a perspective sectional view of a 3D-incisor tooth model with a fracture structure (FIG. 8A) and a cross-sectional view of the 3D-incisor tooth model with the fracture structure (FIG. 8B).
FIG. 9 shows a perspective sectional view of a 3D-canine tooth model with a fracture structure (FIG. 8A) and a cross-sectional view of the 3D-canine tooth model with the fracture structure (FIG. 8B).
Fig. 10 shows a perspective view of a system of a fourth embodiment of a 3D-printed jaw model and a plurality of 3D-printed tooth models.
Fig. 11 shows a cross-sectional view of a 3D-canine jaw model with separated sections of the 3D-printed jaw model.

### DESCRIPTION OF REFERENCE NUMERALS

- 1: system
- 2: jaw model
- 3: tooth model
- 4: mask
- 5: core
- 6: layer/section
- 6a: pulp
- 6b: dentin with canaliculi
- 6c: dentin
- 6d: transpa
- 6e: enamel/incisal
- 6f: cement
- 7: fracture structure
- 8: stump
- 9: root
- 10: caries structure
- 10a: first caries structure
- 10b: second caries structure
- 10c: third caries structure
- 11 to 48: FDI tooth numbers
- 48: receptacle
- 49: Schneider membrane
- 50: gap between cortical bone and membrane
- 51: trabeculae
- 52: bone marrow simulation
- 53: cortical bone
- 54: tissue-like fiber
- 55: gingiva
- 56: antrum

### DETAILED DESCRIPTION OF THE INVENTION

In the following description, positions of teeth in a jaw are defined referring to a number of a tooth in the FDI World Dental Federation notation. The FDI (World Dental Federation notation) is a dental notation regarding a tooth position in a denture of a mature human, widely used by dentists internationally to associate information to a specific tooth numbering. Teeth of a patient's upper right side are numbered from 11 to 17, starting in the center of the upper jaw at the incisor via the canine and ending at the molar. Teeth of a patient's upper left side are numbered from 21 to 27, starting in the center of the upper jaw at the incisor via the canine and ending at the molar. Teeth of a patient's lower left side are numbered from 31 to 37, starting in the center of the lower jaw at the incisor via the canine and ending at the molar. Teeth of a patient's lower right side are numbered from 41 to 47, starting in the center of the lower jaw at the incisor via the canine and ending at the molar.

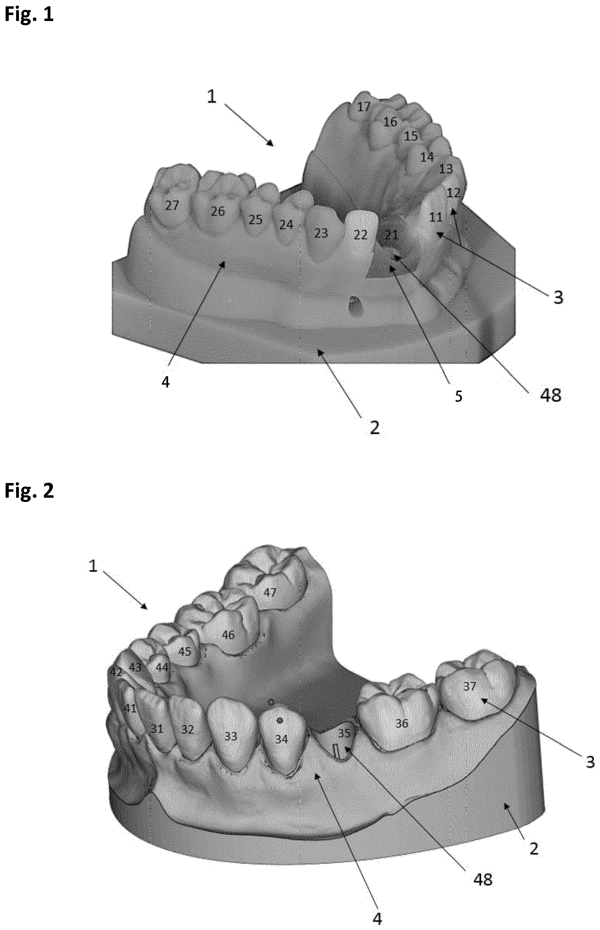

Referring to the drawings, FIG. 1 illustrates a perspective view of a system 1 of a first embodiment of an upper jaw model 2, including tooth models 3 fitted into respective receptacles 48, medically called Alveoles.

FIG. 1 illustrates an upper jaw model 2 integrally formed with teeth of a patient's upper right side with the FDI numbers 11 to 17, as well as teeth of a patient's upper left side with the FDI numbers 22 to 27. Additionally, it can be taken from FIG. 1 that, on the position for the tooth with the FDI numbers 21, the jaw model 2 has a receptacle 48capable of removably receiving a tooth model 3. One empty receptacle 48 is shown at the position of the tooth with the FDI number 21. The other teeth are integrally formed by 3D-printing with the jaw model 2.

The jaw model 2 is composed of at least two sections 4, 5 of different hardness. An upper part of the receptacle 48 is formed by a section 4, which forms a mask 4 and a lower part of the receptacle 48 is integrally formed with the residual section of the lower jaw model, namely a core 5.

The core 5 replicates the bone structure of the naturally grown jaw, and the mask 4 surrounding the core 5 replicates the tissue structure of the naturally grown human jaw. The core 5 is embedded into the mask 4 in a form-fit manner. The mask 4, which imitates a human teeth ridge (gingiva), and the core 5, which corresponds to the jawbone, have a different degree of hardness. The degree of hardness of the mask 4 is lower than the degree of hardness of the core 5. The core 5 has a degree of hardness Shore Scale D in the range of 70 to 90 and the mask 4 has a degree of hardness Shore Scale A in the range of 15 to 35.

Additionally, the sections of the jaw model 2 have different colors, so that they can be recognized as different sections not only by their mechanical properties, but also due to their optical appearance. The color of the respective sections imitates the color of the replicated part of the human jaw, in other words the mask 4 has a color typical for a human teeth ridge, e.g. a pink-transparent material and the core 5 has a color typical for a human bone, e.g. white or grey.

The sections can also have different degrees of transparency. Additionally the hardness, the color or the transparency within one section can change locally. Therewith, for example an inflammation of the teeth ridge or a weakness within the bone structure of the jaw model 2 can be simulated.

The jaw model 2 is configured to be used by a dental student for practicing techniques of operative dentistry (i.e. dental and oral surgery techniques in endodontics and/or orthodontics) like the extraction of a tooth or treatment of the teeth ridge. The jaw model 2 and/or the tooth model 3 is/are disposable. Models processed by the dental student can be replaced by a new jaw model 2 and/or tooth model 3.

On the other hand, the jaw model 2 can be used several times, in a case, where it is not processed, and only serves as a basic structure for holding tooth models 3 to be treated. With the interchangeability of the tooth models 3 in the jaw model 2, the jaw model 2 can be reused with a different selection of tooth models 3.

The jaw model 2 has a magnet and an intermediate plate magnetically coupleable with the magnet. The magnet is positioned inside the core 5 closely beneath the surface at a rear side of the jaw model 2, opposite to the side including the receptacle 48 forming a front side. The intermediate plate is preferably fastened to a holding device, preferably a phantom head, wherein the intermediate plate is preferably screwed into the holding device.

FIG.2 shows a perspective view of a system 1 including a second embodiment of a jaw model 2 and several tooth models 3. In FIG. 2, the jaw model 2 is formed as a lower jaw model (mandibular) replicating the lower jaw of a human, but the jaw model 2 can also be formed as an upper jaw model (maxilla) replicating the upper jaw of a human. The jaw model 2 is modeled after a human mandible or maxilla based on a 3D-scan.

Moreover, FIG. 2 shows thirteen tooth models 3 replicating inter alia the tooth with the FDI numbers 31 to 34, 36, 37 and 41 to 47. FIG. 2 also shows a free receptacle 48 at the position with the FDI number 35. The tooth models 3 are removably fitted into the respective receptacles 48 of the lower jaw model 2. The tooth models 3 stand out in color from the jaw model 2.

Both the jaw model 2 and the tooth models 3 are manufactured in order to replicate the naturally grown structures of human jaw/tooth by a 3D-printing process based on a 3D-scan thereof, respectively.

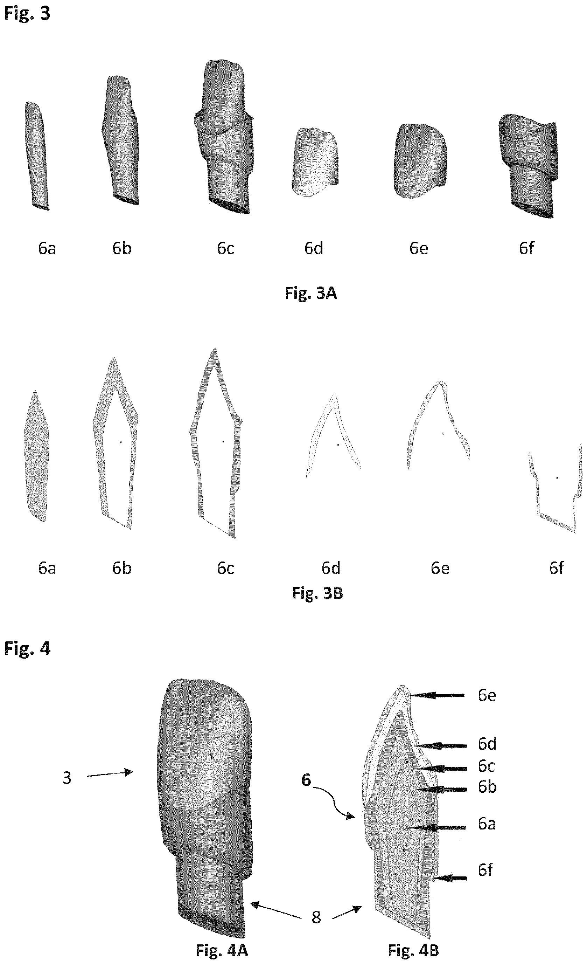

FIG. 3A shows a perspective view of layers/sections 6 of a first embodiment of the tooth model 3. The tooth model 3 consist of a plurality of layers/sections 6. In FIG. 3A, the six sections correspond to the six layers of a naturally grown tooth, namely pulp 6a , dentin with canaliculi 6b, dentin 6c, transpa 6d, enamel 6e and cement 6f. These layers/sections 6 are depicted in a cross sectional view in FIG. 3B.

The multiple sections 6 of the tooth model 3 imitate the layers of a naturally grown human tooth and have a different degree of hardness. The degree of hardness of the sections 6 preferably decreases from the outermost section towards the innermost section 6 of the tooth model 3. The sections 6 have a degree of hardness Shore Scale D in the range from 70 to 90. For example, the dentin with canaliculi 6b is printed in a Soft Shore Scale A 15-35 material.

Additionally, the sections 6 of the tooth model 3 have different colors, so that they can be both mechanically and optically identified as different layers of a naturally grown human tooth. On the one hand, the color of the respective sections 6 may imitate the color of the respective replicated layer of the human tooth. More precisely, for example the dentin with canaliculi 6b is printed in an orange tone. On the other hand, the colors of the different layers/sections 6, especially the inner layers/sections 6, may vary in the whole spectrum of colors, so that they are easily identified as different tooth layers and a boundary between the tooth layers can easily be recognized. This is intended to clearly highlight the boundary between the layers of the tooth to a future dentist in his training in order to show and avoid an unintended crossing of a border of a tooth layer.

FIG. 4A shows a perspective view of the above mentioned 3D-printed tooth model 3 and FIG. 4B illustrates a cross-sectional view of the 3D-printed tooth model 3 through its six assimilated layers/sections 6. As can be taken from FIG. 4B, the tooth model 3 is constituted of the pulp 6a as innermost layer, covered by the dentin with canaliculi 6b, which is covered by the dentin 6c, respectively. In the upper part of the incisor depicted in FIG. 4A and 4B the dentin 6c is covered by the transpa 6d and has the enamel 6e as the outmost layer. In the lower part of the tooth model 3 the dentin 6c is covered by the cement 6f.

As can be seen in FIG. 3 and 4, the tooth model 3 has a stump 8 on the lower part of the tooth model 3. The stump 8 is essentially formed by the cement 6f and the dentin 6c layer and has a form of a cylinder with a circular or elliptic cross section and an inclined surface at the undermost end of the tooth model 3 with respect to the cylinder axis. The cylinder axis corresponds to the insertion direction of the tooth model 3 into the receptacle 48. The tooth model 3 is configured to be pressed into a receptacle 48 of the core 5 and mask 4 of the jaw model 2, which is shaped as a counterpart, namely a cylindrical recess with a circular or elliptic cross section and an inclined surface at the undermost end of the receptacle 48. The tooth model 3 is removably seated with its stump 8 in the receptacle 48 of the jaw model 2 and is held in the jaw model 2 in a force-fit and/or form-fit manner.

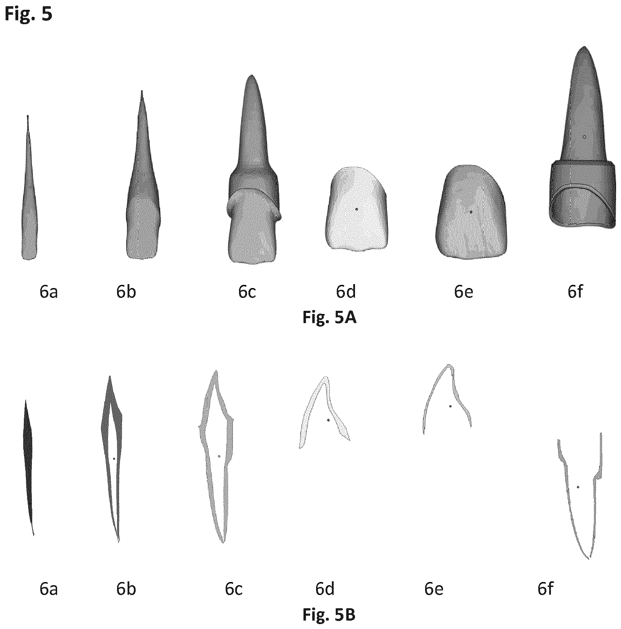

FIG. 5 shows a second embodiment of a tooth model 3. The second embodiment of the tooth model 3 also consists of the respective layer sections 6 according to FIG. 4, with a root 9 at the lower end of the tooth model 3 instead of the stump 8. The root 9 is essentially coneshaped with a tip at the bottom like a natural root part of a tooth and is formed by the cement 6f, the pulp 6a, the dentin with canaliculi 6b and the dentin 6c. The cone axis corresponds to the insertion direction of the tooth model 3 into the receptacle 48. The tooth model 3 is configured to be pressed into a receptacle 48 of the core 5 of a jaw model 2, which is shaped as a counterpart, namely a recess in the form of a negative root part. The tooth model 3 is removably seated with its root 9 in the receptacle 48 of the jaw model 2 and is held in the jaw model 2 in a force-fitting and/or form-fitting manner.

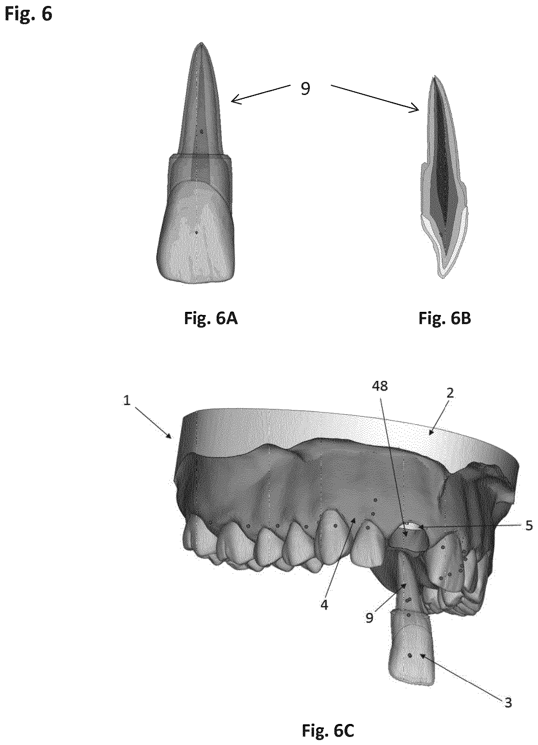

FIG. 6 shows a perspective view of a 3D-printed tooth model with a root and a cross-sectional view of the 3D-printed tooth model with a root, The respective layer sections 6 have been mentioned earlier and are not further discussed. FIG. 6C shows a perspective view of a system 1 of a third embodiment of a 3D-printed jaw model 2 and a plurality of 3D-printed tooth models 3 with a root 9. FIG. 6C shows one incisor tooth model 3 having a root 9 being fitted into its respective receptacle 48 with a form of a negative root part.

It is to be noted that the tooth models 3 can have different shapes of the stump 8 and the root 9 depending on the kind of tooth, incisor, canine or molar. For example, the cross section of a stump 8 of a molar is bigger than the cross section of the stump 8 of an incisor. The root 9 of a tooth model has either one root part or two root parts dependent on the kind of tooth, incisor, canine or molar. For example, a root end of a molar has two root parts, whereas a root 9 of an incisor has only one root part. The cross-section of a stump and the number of root parts is selected dependent on which natural tooth is replicated by the tooth model 3.

It is further to be noted that the end part of the tooth model 3 and the receptacle 48 of the jaw model 2 are formed corresponding to the certain FDI number position. This means that the lower part of a tooth model 3 with a certain FDI number matches with the complementary receptacle 48 on the jaw model 2 with the same FDI number. This applies to both the first and the second embodiment of the tooth model 3 and the jaw model 2, respectively. This means, for example that a tooth, with an end part corresponding to FDI number 31 cannot be seated in the receptacle 48 in the jaw model 2 corresponding to FDI number 37. However, a tooth model 3 can be individually shaped at its upper part, but requires an end part corresponding to a position in the jaw model 2 it is to be seated.

The jaw model 2 and the tooth model 3 are configured to be connected by friction-fit and/or form-fit, when the tooth model 3 is seated in the receptacle 48 in the core 5 and/or the mask 4 of the jaw model 2, wherein the receptacle 48 has the negative shape of the tooth stump 8 or the tooth root 9.

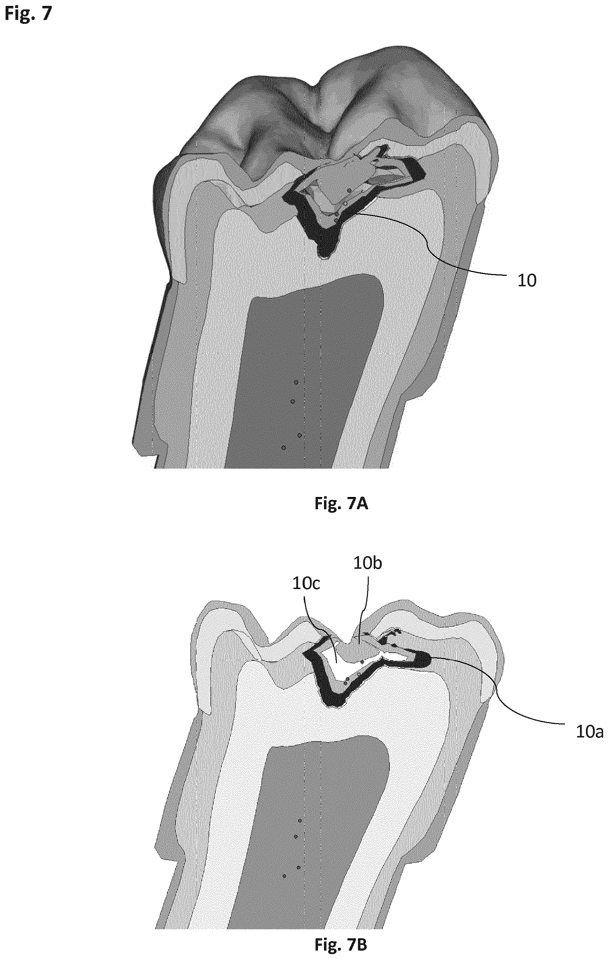

FIG. 7A shows a perspective sectional view of a 3D-molar tooth model 3 with a replication of a caries structure 10 of a naturally grown human tooth. The caries structure 10 extends within at least one of the layers/sections 6 is an area of different, preferably darker color (e.g. black) and/or preferably lower hardness as compared to the surroundings of the respective layer/section 6. More preferably, the caries structure 10 extends continuously in at least two layers/sections 6 crossing the boundary between the at least two layers/sections 6. As shown in FIG. 7A, more than one of the replicated layers/sections 6 are affected by the caries structure 10. The caries structure 10 extends continuously through the dentin with canaliculi 6b, the dentin 6c and the transpa 6d. This simulates a naturally grown caries structure. A dental student could learn from such tooth model 3 that the enamel 6e has to be drilled out to treat the caries structure 10.

FIG. 7B shows a cross-sectional view of the 3D-molar tooth model 3 with a caries structure 10. It is to be noted that the caries structure 10 is constituted of at least a first caries layer 10a, but could also be constituted of a second caries layer 10b and a third caries layer 10c. Preferably, the three caries layer sections also have a different hardness and color in order to be distinguishable and treated differently by the dental student treating the tooth model 3. The overall caries structure 10 may have a shape, which is only small on the surface of the tooth model 3 and increases towards the deeper layer sections 6 of the tooth model 3.

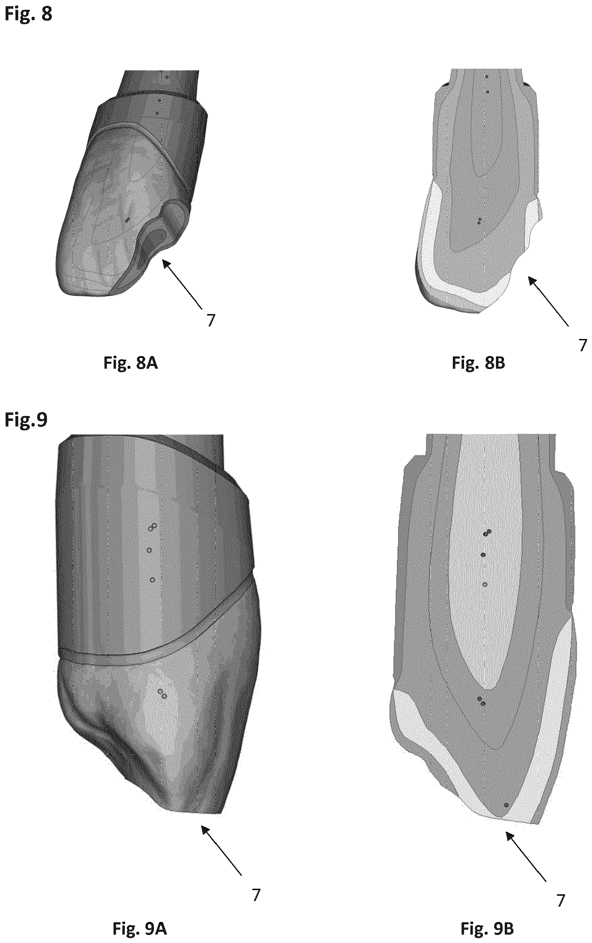

FIG. 8A shows a perspective sectional view of a 3D-incisor tooth model 3 with a replication of a fracture structure 7 of a naturally grown human tooth. The fracture structure 7 extends within at least one of the layer sections 6 and is an area of different, preferably darker color and/or preferably lower hardness. The fracture structure 7 preferably extends continuously in at least two layer sections 6 crossing the boundary between the at least two layer sections 6.

FIG. 8B shows a cross-sectional view of the 3D-incisor tooth model with fracture structure 7. The fracture structure 7 is configured to be positioned at an exposed part of the tooth model 3, when it is seated in the receptacle 48 of the jaw model 2. As can be seen in FIG. 8B, the layer sections of the enamel 6e, the transpa 6d, the dentin 6c and the dentin with canaliculi 6b are affected by the fracture structure 7. A fracture structure 7, as shown in FIG. 8A and FIG. 8B, allows a dental student to learn how to repair and replenish an existing layer structure 6.

FIG. 9A and FIG. 9B show a perspective sectional view and a cross-sectional view, respectively of a 3D-canine tooth model 3. Therein, a fracture structure 7 affects the layer sections of the enamel 6e, the transpa 6d and the dentin 6c, wherein the enamel 6e is simulated to be completely fractured from the tip of the canine tooth model 3. A fracture structure 7, as shown in FIG. 9A and FIG. 9B allows a dental student to learnhow to reconstruct a fractured tooth.

Additionally, the aging of a tooth can also be replicated by the present invention. At least the outermost layer/section 6 can have different colors on the surface within the layer/section 6 to mimic tooth aging. The degree of hardness within at least one of the layers/sections 6, preferably of the outermost layer/section 6, can also have a changing gradient towards the surface to mimic tooth aging.

The tooth model 3 is configured to be used by a dental student to experience dental practices and oral surgery techniques in endodontics and/or orthodontics by simulating real operations like the extraction of a tooth or treatment of the tooth body and surface. The tooth model 3 or parts thereof are disposable. Models processed by the dental student can be replaced by a new tooth model 3 or parts thereof.

The jaw model 2 is configured to be used by a dental student to experience practices and oral surgery techniques in endodontics and/or orthodontics, e.g. extractions, implantations, transplantations and cutting and stitching techniques, all referred to as techniques of operative dentistry..

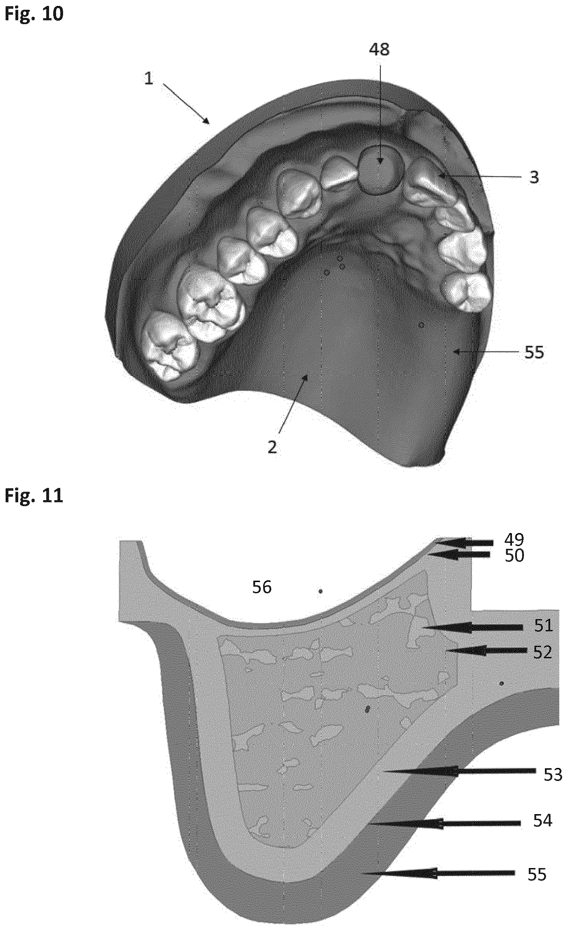

Fig. 10 shows a further embodiment of an upper jaw model 2, providing several receptacles 48 with fitted tooth models 3 therein. The jaw model provides a tooth- and receptacle-free posterior region at the position of an incisor and in the area of teeth with the FDI numbers 25 to 27 (empty space covered by the mask 4, e.g. gingiva 55). This region, formed by bone structure covered with tissue, is configured to imitate a real environment for a surgery such as a implantation of a tooth. In order to be able to simulate an external or internal sinus floor elevation, the jaw model 2 is further provided with an antrum 56 (maxillary sinus) in the posterior region.

To imitate a real environment for such operations, the sections of the jaw model 2 are further divided into a plurality of sections to imitate the layers of a natural grown jaw bone. Fig. 11 is a cross sectional view of the embodiment of a jaw model 2 of FIG. 10 showing further sections of the jaw model 2 which constitut the bone structure of the jaw model 2. The jaw model 3 includes the sections Schneider membrane 49 as a section next to the antrum 56, a gap between cortical bone and membrane 50, trabeculae 51, bone marrow 52, cortical bone 53, tissue-like fiber 54 and said gingiva 55.

The hardness of the gingiva 55, in form of the mask 4 has been described earlier. The Schneider membrane 49, building the membranous lining of the maxillary sinus, is printed in soft material with a hardness of a Shore Scale A in an area between 18 and 30. The Schneider membrane 49, printed in approx. 0.2-0.5 mm, can be lifted off the printed bone with suitable instruments. Thus, a sinus floor elevation can be performed and injected with suitable bone material.

The gap between cortical bone and membrane 50 is another printed layer of support material, with a thickness of 0.02-0.09 mm, lying between the Schneider membrane 49 and the cortical bone 53. The cortical bone 53 printed with a hardness of Shore Scale D in an area between 70 and 90 and a thickness of about 1-2mm.

The cortical bone 53 surrounds the cancellous area constituted of the bone marrow 52 and the trabeculae 51. A spongy system of fine trabeculae 51, printed with a hardness of Shore Scale D in an area between 70 and 90, surrounds cavities wherein the bone marrow 52 is located (printed with a hardness of a Shore Scale A in an area between 15and 35). Thus, the different bone classes can be imitated, by a inhomogeneous mixture of the trabeculae 51 and the bone marrow 52.

The gingiva 55 is not fixed to the cortical bone 53, but is separated with a thin layer of approx. 0.02-0.09 tissue-like fiber 54 with a hardness of Shore Scale A 10. This is intended to simulate the connective tissue fibers that attach the gingiva 55 to the cortical bone 53, which can be scraped off the printed bone with special instruments. Likewise, with the Tensile Tear Resistance of 4-7 kg/cm (22-39 Ib/in) of the gingiva 55 can be used to practice and teach the different cutting and stitching techniques.

There are two types of models with different bone ratios available: "Beginner" with a bone thickness of about 11-15 mm and "Advanced" with a bone thickness of less than 3-6 mm.

The present invention provides the system 1 comprising the jaw model 2 in combination with one or more tooth models 3. According to the above, both models can be variously formed. Hence, a huge number of different combination options for a system is offered by the present invention. A standard jaw model 2 has all 14 tooth models 3 replicating healthy teeth in a human. Due to the interchangeability of the tooth models 3, each tooth model 3 can be replaced by a respective tooth model 3 having the same FDI number and having for example a fracture structure 7, a caries structure 10 or an aging structure, as described above. The degrees of hardness and the colors of each layer/section 6 of the tooth model can be chosen separately. Additionally, the mask 4 and the core 5 of the jaw model 2 can be individually formed and assembled.

The system 1 according to the present invention provides almost realistic appearing training models of a jaw and at least one tooth and can be used for practicing any kind of dental treatment method. The modularity of the system 1 provides a great versatility.

## Claims

1. A system (1) for practicing techniques of operative dentistry, said system comprising at least one jaw model (2) and at least one tooth model (3) for practicing techniques of operative dentistry, the jaw model (2) and the tooth model (3) being manufactured by means of 3D-printing and modeled after a naturally grown human jaw and tooth, respectively, wherein the jaw model (2) has at least two sections (4, 5) of different hardness and comprises at least one receptacle (48) for removably receiving the at least one tooth model (3), wherein the tooth model (3) has at least two sections (6) of different hardness and is configured to be removably inserted in the receptacle (48) of the jaw model (2), wherein the tooth model (3) comprises a tooth stump (8) or a tooth root (9), wherein the jaw model (2) comprises a core (5) and a mask (4), the core (5) replicating a bone structure of the naturally grown jaw and the mask (4) replicating a tissue structure surrounding the bone structure of the naturally grown human jaw, wherein the core (5) is embedded in the mask (4) in a form-fit manner, wherein the mask (4) has a lower hardness than the core (5), and wherein the core (5) and the mask (4) at least partially form the at least one receptacle (48), so as to removably receive the at least one tooth model (3) by force-fit and/or form-fit, wherein the receptacle has the negative shape of the tooth stump (8) or the tooth root (9).

2. The system according to claim 1, wherein the jaw model (2) is modeled based on a 3D-scan of a human mandible or maxilla .

3. The system according to one of the preceding claims, wherein the jaw model (2) comprises at least one of the following features:
a. Each section (4, 5) of the jaw model (2) replicates one of the following sections of a natural human jaw:
i. Schneider membrane (49), preferably located next to the antrum (56) section, wherein the Schneider membrane (49) more preferably builds the membranous lining of the maxillary sinus, wherein the Schneider membrane (49) even more preferably is printed in soft material with a hardness of a Shore Scale A in an range from 18 to 30 and/or a thickness in the range from 0.2 to 0.5 mm, wherein the Schneider membrane (49) even more preferably can be lifted off the printed bone (with suitable instruments).
ii. a Gap between cortical bone and membrane (50), wherein said Gap (50) is preferably a 3D-printed layer of support material, more preferably with a thickness in the range from 0.02 the 0.09 mm, wherein the Gap (50) is even more preferably located between the Schneider membrane (49) section and the cortical bone (53) section.
iii. Trabeculae (51), preferably as a spongy system of fine trabeculae (51), more preferably 3D-printed with a hardness of Shore Scale D in a range from 70 to 90, wherein the Trabeculae (51) section more preferably surrounds cavities wherein the bone marrow (52) sections is located.
iv. Bone marrow (52), preferably 3D-printed with a hardness of a Shore Scale A in an area between 15 and 35, wherein the bone marrow (52) section is even more preferably inhomogeneously mixed with the trabeculae (51) section in order to imitate different bone classes.
v. Cortical bone (53), which preferably surrounds the cancellous area constituted of the bone marrow (52) section and the Trabeculae (51) section, wherein the cortical bone (53) section is more preferably 3D-printed with a hardness of Shore Scale D in a range from 70 to 90 and/or a thickness in the range from 1 to 2 mm.
vi. Tissue-like fiber (54), preferably printed with a thickness in the range from 0.02 to 0.09 mm, more preferably with a hardness of Shore Scale A in the range from 8 to 12, in particular 10, wherein the tissue-like fiber (54) section more preferably simulates connective tissue fibers and/or attaches the gingiva (55) section to the cortical bone (53) section, preferably such that the tissue-like fiber (54) section can be scraped off the cortical bone (53) section (with special instruments).
vii. Gingiva (55), preferably with a Tensile Tear Resistance in the range from 4 to 7 kg/cm, so that it can be used for practicing different cutting and stitching techniques.
viii. Antrum (56).

4. The system according to claim 3, wherein the core (5) has a degree of hardness Shore Scale D in the range of 70 to 90 and/or the mask (4) has a degree of hardness Shore Scale A in the range of 15 to 35.

5. The system according to claim 3 or 4, wherein the receptacle (48) more preferably has the negative shape of a tooth stump (8) or a tooth root (9).

6. The system according to one of the preceding claims, wherein the jaw model (2) comprises a magnet and an intermediate plate which is magnetically coupleable with the magnet, wherein the intermediate plate is preferably mechanically coupleable with a holding device, more preferably a phantom head, even more preferably by means of at least one screw.

7. The system according to one of the preceding claims, wherein the tooth model (3) is modeled after a human tooth based on a 3D-scan of one of the human teeth 17-27 or 37-47.

8. The system according to one of the preceding claims, wherein each of the tooth sections (6) replicates one of the tooth layers (6a to 6f) of the human tooth, preferably pulp (6a), dentin with canaliculi (6b), dentin (6c), transpa (6d), enamel/incisal (6e), cement (6f), wherein more preferably the tooth sections (6) have different colors, wherein even more preferably each section (6) has a natural color and hardness of the corresponding tooth layer of the human tooth.

9. The system according to any of the two preceding claims, wherein at least one tooth section (6), preferably the outermost section (6), has different colors and/or different hardness, preferably on the surface thereof, to replicate tooth aging.

10. The system according to the preceding claim, wherein the color and/or hardness of said at least one section (6) gradually changes towards the surface thereof.

11. The system according to any of the preceding claims, wherein the tooth model (3) comprises a caries structure (10) replicating caries of a naturally grown human tooth, wherein preferably the caries structure (10) is provided in at least one of said sections (6) and differs in material properties from the surrounding material forming said section (6), particularly by darker color and/or lower hardness, wherein more preferably the caries structure (10) continuously extends across the at least one section (6) and/or extends across a boundary between adjacent two sections (6).

12. The system according to any of the preceding claims, wherein the tooth model (3) comprises a fracture structure (7) replicating fracture of a naturally grown human tooth, wherein preferably the fracture structure (7) is provided in at least one of said sections (6) and differs from the surrounding material forming said section (6) by forming at least one breaking edge on the surface of the tooth, wherein more preferably the fracture structure (7) cuts through at least two of said sections (6), so that the at least two sections (6) are exposed on the surface of the tooth.

## Patentansprüche

1. Ein System (1) zum Üben von Techniken der operativen Zahnchirurgie, wobei das System mindestens ein Kiefermodell (2) und mindestens ein Zahnmodell (3) zum Üben von Techniken der operativen Zahnchirurgie umfasst, wobei das Kiefermodell (2) und das Zahnmodell (3) mittels 3D-Drucken hergestellt und jeweils einem natürlich gewachsenen menschlichen Kiefer bzw. Zahn nachgebildet sind, wobei das Kiefermodell (2) mindestens zwei Abschnitte (4, 5) unterschiedlicher Härte aufweist und mindestens eine Aufnahme (48) zur entnehmbaren Aufnahme des mindestens einen Zahnmodells (3) umfasst, wobei das Zahnmodell (3) mindestens zwei Abschnitte (6) unterschiedlicher Härte aufweist und zum entnehmbaren Einsetzen in die Aufnahme (48) des Kiefermodells (2) ausgebildet ist, wobei das Zahnmodell (3) einen Zahnstumpf (8) oder eine Zahnwurzel (9) umfasst, wobei das Kiefermodell (2) einen Kern (5) und eine Maske (4) umfasst, wobei der Kern (5) eine Knochenstruktur des natürlich gewachsenen Kiefers nachbildet und die Maske (4) eine die Knochenstruktur des natürlich gewachsenen menschlichen Kiefers umgebende Gewebestruktur nachbildet, wobei der Kern (5) formschlüssig in die Maske (4) eingebettet ist, wobei der Kern (5) formschlüssig in die Maske (4) eingebettet ist, wobei die Maske (4) eine geringere Härte als der Kern (5) aufweist, und wobei der Kern (5) und die Maske (4) zumindest teilweise die mindestens eine Aufnahme (48) bilden, um das mindestens eine Zahnmodell (3) durch Kraft- und/oder Formschluss entfernbar aufzunehmen, wobei die Aufnahme die Negativform des Zahnstumpfes (8) oder der Zahnwurzel (9) aufweist.

2. Das System gemäß Anspruch 1, wobei
das Kiefermodell (2) auf der Grundlage eines 3D-Scans eines menschlichen Unteroder Oberkiefers modelliert wird.

3. Das System gemäß einem der vorhergehenden Ansprüche, wobei das Kiefermodell (2) mindestens eines der folgenden Merkmale aufweist:
a. Jeder Abschnitt (4, 5) des Kiefermodells (2) ist einem der folgenden Abschnitte eines natürlichen menschlichen Kiefers nachempfunden:
i. Schneider-Membran (49), vorzugsweise neben dem Antrum-Abschnitt (56) angeordnet, wobei die Schneider-Membran (49) besonders bevorzugt die membranöse Auskleidung der Kieferhöhle bildet, wobei die Schneider-Membran (49) besonders bevorzugt aus weichem Material mit einer Härte einer Shore-Skala A in einem Bereich von 18 bis 30 und/oder einer Dicke im Bereich von 0,2 bis 0,5 mm gedruckt ist, wobei die Schneider-Membran (49) besonders bevorzugt vom gedruckten Knochen (mit geeigneten Instrumenten) abgehoben werden kann.
ii. einen Spalt zwischen dem kortikalen Knochen und der Membran (50), wobei der Spalt (50) vorzugsweise eine 3D-gedruckte Schicht aus Trägermaterial ist, besonders bevorzugt mit einer Dicke im Bereich von 0,02 bis 0,09 mm, wobei der Spalt (50) noch bevorzugter zwischen dem Schneider-Membranabschnitt (49) und dem kortikalen Knochenabschnitt (53) angeordnet ist.
iii. Trabekel (51), vorzugsweise als schwammartiges System aus feinen Trabekeln (51), vorzugsweise 3D-gedruckt mit einer Härte der Shore-Skala D im Bereich von 70 bis 90, wobei der Abschnitt der Trabekel (51) vorzugsweise Hohlräume umgibt, in denen sich die Abschnitte des Knochenmarks (52) befinden.
iv. Knochenmark (52), vorzugsweise 3D-gedruckt mit einer Härte einer Shore-Skala A in einem Bereich zwischen 15 und 35, wobei der Knochenmarkabschnitt (52) noch bevorzugter inhomogen mit dem Trabekelabschnitt (51) gemischt ist, um verschiedene Knochenklassen zu imitieren.
v. Kortikalknochen (53), der vorzugsweise den spongiösen Bereich umgibt, der aus dem Knochenmark Abschnitt (52) und dem Trabekel Abschnitt (51) besteht, wobei der Kortikalknochen Abschnitt (53) vorzugsweise mit einer Härte der Shore-Skala D in einem Bereich von 70 bis 90 und/oder einer Dicke im Bereich von 1 bis 2 mm 3D-gedruckt ist.
vi. Gewebeartige Faser (54), vorzugsweise bedruckt mit einer Dicke im Bereich von 0,02 bis 0,09 mm, besonders bevorzugt mit einer Härte der Shore-Skala A im Bereich von 8 bis 12, insbesondere 10, wobei der gewebeartige Faserabschnitt (54) besonders bevorzugt Bindegewebsfasern simuliert und/oder den Gingivaabschnitt (55) mit dem Kortikalknochen Abschnitt (53) verbindet, vorzugsweise so, dass der gewebeartige Faserabschnitt (54) vom Kortikalknochen Abschnitt (53) (mit speziellen Instrumenten) abgeschabt werden kann.
vii. Gingiva (55), vorzugsweise mit einer Zugfestigkeit im Bereich von 4 bis 7 kg/cm, so dass sie zum Üben verschiedener Schneid- und Nahttechniken verwendet werden kann.
viii. Antrum (56).

4. Das System gemäß Anspruch 3, wobei
der Kern (5) einen Härtegrad der Shore-Skala D im Bereich von 70 bis 90 aufweist und/oder die Maske (4) einen Härtegrad der Shore-Skala A im Bereich von 15 bis 35 aufweist.

5. Das System gemäß Anspruch 3 oder 4, wobei
die Aufnahme (48) vorzugsweise die Negativform eines Zahnstumpfes (8) oder einer Zahnwurzel (9) hat.

6. Das System gemäß einem der vorhergehenden Ansprüche, wobei
das Kiefermodell (2) einen Magneten und eine mit dem Magneten magnetisch koppelbare Zwischenplatte aufweist, wobei die Zwischenplatte vorzugsweise mechanisch mit einer Haltevorrichtung, bevorzugt einem Phantomkopf, noch bevorzugter mittels mindestens einer Schraube, koppelbar ist.

7. Das System gemäß einem der vorhergehenden Ansprüche, wobei das Zahnmodell (3) einem menschlichen Zahn nachgebildet ist, basierend auf einem 3D-Scan eines der menschlichen Zähne 17-27 oder 37-47.

8. Das System gemäß einem der vorhergehenden Ansprüche, wobei
jeder der Zahnabschnitte (6) eine der Zahnschichten (6a bis 6f) des menschlichen Zahns nachbildet, vorzugsweise Pulpa (6a), Dentin mit Canaliculi (6b), Dentin (6c), Transpa (6d), Schmelz/Schneide (6e), Zement (6f), wobei die Zahnabschnitte (6) vorzugsweise unterschiedliche Farben aufweisen, wobei noch vorteilhafter jeder Abschnitt (6) eine natürliche Farbe und Härte der entsprechenden Zahnschicht des menschlichen Zahns aufweist.

9. Das System gemäß einem der vorhergehenden Ansprüche, wobei
mindestens ein Zahnabschnitt (6), vorzugsweise der äußerste Abschnitt (6), unterschiedliche Farben und/oder eine unterschiedliche Härte aufweist, vorzugsweise auf dessen Oberfläche, um die Zahnalterung nachzuahmen.

10. Das System gemäß einem der vorhergehenden Ansprüche, wobei
sich die Farbe und/oder die Härte des mindestens einen Abschnitts (6) zur Oberfläche hin allmählich verändert.

11. Das System gemäß einem der vorhergehenden Ansprüche, wobei
das Zahnmodell (3) eine Kariesstruktur (10) aufweist, die Karies eines natürlich gewachsenen menschlichen Zahns nachbildet, wobei die Kariesstruktur (10) vorzugsweise in mindestens einem der Abschnitte (6) angeordnet ist und sich in ihren Materialeigenschaften von dem den Abschnitt (6) bildenden Umgebungsmaterial unterscheidet, insbesondere durch eine dunklere Farbe und/oder eine geringere Härte, wobei sich die Kariesstruktur (10) vorzugsweise durchgehend über den mindestens einen Abschnitt (6) erstreckt und/oder sich über eine Grenze zwischen zwei benachbarten Abschnitten (6) erstreckt.

12. Das System gemäß einem der vorhergehenden Ansprüche, wobei das Zahnmodell (3) eine Bruchstruktur (7) aufweist, die den Bruch eines natürlich gewachsenen menschlichen Zahns nachbildet, wobei die Bruchstruktur (7) vorzugsweise in mindestens einem der Abschnitte (6) angeordnet ist und sich von dem umgebenden Material, das den Abschnitt (6) bildet, dadurch unterscheidet, dass sie mindestens eine Bruchkante an der Oberfläche des Zahns bildet, wobei die Bruchstruktur (7) vorzugsweise mindestens zwei der Abschnitte (6) durchschneidet, so dass die mindestens zwei Abschnitte (6) an der Oberfläche des Zahns freigelegt sind.

## Revendications

1. Système (1) pour pratiquer des techniques de dentisterie opératoire, ledit système comprenant au moins un modèle de mâchoire (2) et au moins un modèle de dent (3) pour pratiquer des techniques de dentisterie opératoire, le modèle de mâchoire (2) et le modèle de dent (3) étant fabriqués au moyen de l'impression 3D et modélisés d'après une mâchoire et une dent humaines cultivées naturellement, respectivement, dans lequel le modèle de mâchoire (2) comporte au moins deux sections (4, 5) de dureté différente et comprend au moins un réceptacle (48) pour recevoir de manière amovible au moins un modèle de dent (3), dans lequel le modèle de dent (3) comporte au moins deux sections (6) de dureté différente et est configuré pour être inséré de manière amovible dans le réceptacle (48) du modèle de mâchoire (2), dans lequel le modèle de dent (3) comprend un moignon de dent (8) ou une racine de dent (9), dans lequel le modèle de mâchoire (2) comprend un noyau (5) et un masque (4), le noyau (5) reproduisant une structure osseuse de la mâchoire naturelle et le masque (4) reproduisant une structure tissulaire entourant la structure osseuse de la mâchoire humaine naturelle, dans lequel le noyau (5) est encastré dans le masque (4) de manière à s'adapter à la forme de la mâchoire, dans lequel le masque (4) a une dureté inférieure à celle du noyau (5), et dans lequel le noyau (5) et le masque (4) forment au moins partiellement ledit au moins un réceptacle (48), de manière à recevoir de manière amovible ledit au moins un modèle de dent (3) par force et/ou ajustement, dans lequel le réceptacle a la forme négative du moignon dentaire (8) ou de la racine dentaire (9).

2. Système selon la revendication 1, dans lequel le modèle de mâchoire (2) est modélisé sur la base d'un scan 3D d'une mandibule ou d'un maxillaire humain.

3. Système selon l'une des revendications précédentes, dans lequel le modèle de mâchoire (2) comprend au moins l'une des caractéristiques suivantes :
a. chaque section (4, 5) du modèle de mâchoire (2) reproduit l'une des sections suivantes d'une mâchoire humaine naturelle :
i. une membrane de Schneider (49), de préférence située à côté de la section antrale (56), dans laquelle la membrane de Schneider (49) constitue de préférence le revêtement membranaire du sinus maxillaire, dans laquelle la membrane de Schneider (49) est de préférence imprimée dans un matériau souple avec une dureté de l'échelle Shore A comprise entre 18 et 30 et/ou une épaisseur comprise entre 0,2 et 0,5 mm, la membrane Schneider (49) pouvant, de préférence, être détachée de l'os imprimé (à l'aide d'instruments appropriés).
ii. un espace entre l'os cortical et la membrane (50), dans lequel ledit espace (50) est de préférence une couche de matériau de support imprimée en 3D, de préférence d'une épaisseur comprise entre 0,02 et 0,09 mm, dans lequel l'espace (50) est encore plus préférablement situé entre la section de la membrane Schneider (49) et la section de l'os cortical (53).
iii. des trabécules (51), de préférence sous la forme d'un système spongieux de fines trabécules (51), de préférence imprimées en 3D avec une dureté de l'échelle Shore D comprise entre 70 et 90, la section des trabécules (51) entourant de préférence les cavités dans lesquelles se trouvent les sections de la moelle osseuse (52).
iv. de la moelle osseuse (52), de préférence imprimée en 3D avec une dureté de l'échelle de Shore A dans une zone comprise entre 15 et 35, la section de moelle osseuse (52) étant de préférence mélangée de manière inhomogène avec la section de trabécules (51) afin d'imiter différentes classes d'os.
v. un os cortical (53), qui entoure de préférence la zone spongieuse constituée de la section de moelle osseuse (52) et de la section de trabécules (51), la section d'os cortical (53) étant de préférence imprimée en 3D avec une dureté de Shore Scale Dina comprise entre 70 et 90 et/ou une épaisseur comprise entre 1 et 2 mm.
vi. une fibre tissulaire (54), de préférence imprimée avec une épaisseur comprise entre 0,02 et 0,09 mm, de préférence avec une dureté de l'échelle Shore A comprise entre 8 et 12, en particulier 10, dans laquelle la section de fibre tissulaire (54) simule de préférence des fibres de tissu conjonctif et/ou attache la section de gencive (55) à la section d'os cortical (53), de préférence de manière à ce que la section de fibre tissulaire (54) puisse être grattée de la section d'os cortical (53) (à l'aide d'instruments spéciaux).
vii. une gencive (55), de préférence avec une résistance à la déchirure comprise entre 4 et 7 kg/cm, afin qu'elle puisse être utilisée pour pratiquer différentes techniques de coupe et de couture.
viii. une section antrale (56).

4. Système selon la revendication 3, dans lequel le noyau (5) a un degré de dureté Shore Scale D compris entre 70 et 90 et/ou le masque (4) a un degré de dureté Shore Scale A compris entre 15 et 35.

5. Système selon les revendications 3 ou 4, dans lequel le réceptacle (48) a, de préférence, la forme négative d'un moignon de dent (8) ou d'une racine de dent (9).

6. Système selon l'une des revendications précédentes, dans lequel le modèle de mâchoire (2) comprend un aimant et une plaque intermédiaire qui est couplée magnétiquement à l'aimant, la plaque intermédiaire étant de préférence couplée mécaniquement à un dispositif de maintien, plus préférentiellement une tête fantôme, encore plus préférentiellement au moyen d'au moins une vis.

7. Système selon l'une des revendications précédentes, dans lequel le modèle de dent (3) est modélisé d'après une dent humaine sur la base d'un scan 3D de l'une des dents humaines 17-27 ou 37-47.

8. Système selon l'une des revendications précédentes, dans lequel chaque section de dent (6) reproduit l'une des couches dentaires (6a à 6f) de la dent humaine, de préférence la pulpe (6a), la dentine avec canalicules (6b), la dentine (6c), la transpa (6d), l'émail/l'incisal (6e), le cément (6f), où plus préférablement les sections de dent (6) ont des couleurs différentes, où encore plus préférablement chaque section (6) a une couleur et une dureté naturelles de la couche dentaire correspondante de la dent humaine.

9. Système selon l'une des deux revendications précédentes, dans lequel au moins une section de dent (6), de préférence la section la plus externe (6), a des couleurs différentes et/ou une dureté différente, de préférence sur sa surface, pour reproduire le vieillissement de la dent.

10. Système selon la revendication précédente, dans lequel la couleur et/ou la dureté de ladite au moins une section (6) change progressivement vers la surface de celle-ci.

11. Système selon l'une des revendications précédentes, dans lequel le modèle de dent (3) comprend une structure de carie (10) reproduisant les caries d'une dent humaine naturelle, dans lequel de préférence la structure de carie (10) est fournie dans au moins une desdites sections (6) et diffère dans les propriétés matérielles du matériau environnant formant ladite section (6), en particulier par une couleur plus foncée et/ou une dureté plus faible, dans lequel plus préférablement la structure de carie (10) s'étend continuellement à travers au moins une section (6) et/ou s'étend à travers une limite entre deux sections adjacentes (6).

12. Système selon l'une des revendications précédentes, dans lequel le modèle de dent (3) comprend une structure de fracture (7) reproduisant la fracture d'une dent humaine naturelle, dans lequel de préférence la structure de fracture (7) est fournie dans au moins une desdites sections (6) et diffère du matériau environnant formant ladite section (6) en formant au moins une arête de rupture sur la surface de la dent, dans lequel, de préférence, la structure de fracture (7) traverse au moins deux desdites sections (6), de sorte que les deux sections (6) au moins sont exposées à la surface de la dent.
